**Europäisches Patentamt**

**European Patent Office**

**Office européen des brevets**

(19)

(11) Publication number : **0 359 560 B1**

(12) # EUROPEAN PATENT SPECIFICATION

(45) Date of publication of patent specification :
**23.12.92 Bulletin 92/52**

(51) Int. Cl.⁵ : **C03C 17/04, C03B 9/12, B05B 5/12, C03C 17/00**

(21) Application number : **89309327.8**

(22) Date of filing : **14.09.89**

(54) An apparatus for manufacturing a light diffusing glass envelope.

(30) Priority : **16.09.88 GB 8821777**
**16.09.88 GB 8821800**

(43) Date of publication of application :
**21.03.90 Bulletin 90/12**

(45) Publication of the grant of the patent :
**23.12.92 Bulletin 92/52**

(84) Designated Contracting States :
**AT BE CH DE ES FR GB GR IT LI LU NL SE**

(56) References cited :
**GB-A- 1 421 517**
**US-A- 3 126 300**
**US-A- 3 323 489**
**US-A- 3 775 084**
**US-A- 3 961 600**

(73) Proprietor : **GLASS BULBS LIMITED**
**Harworth**
**Doncaster South Yorkshire DN11 8NF (GB)**

(72) Inventor : **Cox, William Alfred Lawrence**
**Pear Tree Farm**
**Everton Doncaster South Yorkshire (GB)**
Inventor : **Rose, Michael John**
**33 Saxton Avenue Bessacarr**
**Doncaster South Yorkshire (GB)**

(74) Representative : **Fleming, Ian Alexander et al**
**THORN EMI Patents Limited The Quadrangle**
**Westmount Centre Uxbridge Road**
**Hayes Middlesex, UB4 0HB (GB)**

**EP 0 359 560 B1**

## Description

This invention relates to an apparatus for manufacturing a light diffusing glass envelope having a light diffusing coating.

Such an apparatus may advantageously be used to coat glass envelopes by the method disclosed and claimed in our copending European Patent Application claiming priority from GB Patent Application Nos. 8821771.6 and 8821800.3.

It is common practice in the manufacture of incandescent lamp bulbs for the glass envelope of the bulb to be manufactured by a specialist glass manufacturer and then formed into a finished lamp bulb, i.e. with the filament and glass flare sealed into the neck of the envelope, by the lamp manufacturer.

Conventionally, the internal surface of a glass envelope may be modified by acid etching to produce a light diffusive effect, such as in a conventional pearl bulb. A gradual reduction in the degree of acid etching results in a gradual reduction in the amount of diffusion, producing effects such as the 'satin frost' and 'light diffuse' finishes. The objectives of having a light diffusive effect are to diffuse the light from the filament, so as to obscure the filament, without losing significant amounts of light (lumen efficiency).

However, acid etching cannot provide coloured or other special effects. Furthermore, the process of acid etching is both expensive and hazardous because of the materials, such as hydrofluoric acid based liquors, used.

Light diffusive and other special effects can also be produced by the provision of a coating of powder on the internal surface of a glass envelope. The powder can be precipitated out from a solution introduced into the glass envelope but this involves the complication of the introduction of solvents and binders into the glass envelope.

Alternatively, the powder can be electrostatically deposited onto the internal surface of the glass envelope. It is known, e.g as disclosed in US 2,922,065 (Meister et al) to deposit the powder as a dry powder, the powder particles being attracted to and coating the internal surface of the glass envelope under the influence of a potential difference between the surface and the particles. The powder particles are forced through a nozzle and so frictionally charged. A potential difference of the order of 8 to 25kV is maintained between the glass envelope and the powder particles as they emerge from the nozzle. Prior to and during deposition, the glass envelope is heated to a temperature typically in the range of 70°C to 300°C; the heating renders the glass envelope electrically conductive and so neutralises the charge on the powder particles as they are deposited on the glass envelope.

However, known powders used to coat the internal surfaces of glass envelopes, if exposed to the atmosphere for any length of time, tend to absorb or adsorb moisture which can subsequently be released into the formed lamp resulting in adverse effects on lamp performance. Accordingly, the coated glass envelope needs to be formed into a finished light bulb within a short time of coating. This has meant, in the past, that, if a lamp bulb is required having a light diffusing coating, the specialist glass manufacturer has provided a clear glass envelope which the lamp bulb manufacturer has then coated and formed into a finished light bulb.

It is accordingly an object of the present invention to provide an apparatus for manufacturing a light diffusing glass envelope which at least alleviates some of the problems outlined hereinbefore.

According to the present invention, there is provided an apparatus for manufacturing a light diffusing glass envelope, the apparatus comprising means for forming a glass envelope from a layer of glass at an elevated temperature and means for electrostatically depositing particles of a powder on the internal surface of said glass envelope to form a coating on said internal surface, wherein said means for electrostatically depositing particles is positioned to permit deposition of said particles when said glass envelope is attached to said layer.

Accordingly, the glass envelope can be formed and coated by the same apparatus. Furthermore, such an apparatus can be operated at the rate of said means for forming the glass envelope from a layer of glass at said elevated temperature which could be any automatic glass envelope making machine. This rate is of the order of 60,000 envelopes per hour for a ribbon machine, as compared with the coating rate of existing electrostatic deposition apparatus, which is of the order of 6,000 envelopes per hour.

An embodiment of the invention will now be described, by way of example only and, with reference to the accompanying drawings in which:

Figure 1 shows, schematically, an apparatus provided in accordance with the present invention;
Figure 2 shows means for electrostatically coating the internal surface of a glass envelope including nozzle assemblies;
Figures 3 and 4 show respectively a section and a side view of one of the nozzle assemblies of Figure 2;
Figure 5 shows a smoke generator; and
Figure 6 shows the association of a nozzle assembly and a smoke distribution chamber.

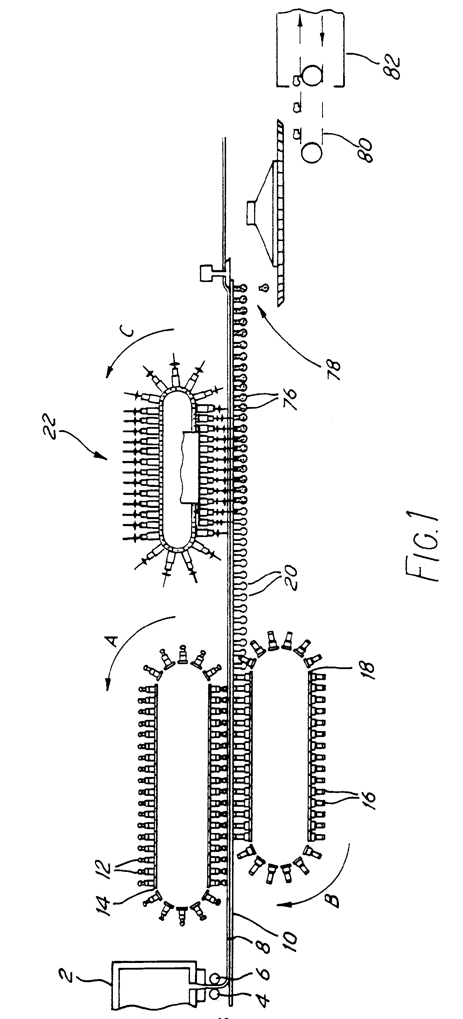

As shown in Figure 1, the apparatus comprises a furnace 2 which produces a controlled flow of softened glass at a temperature typically in the range of from 950°C to 1150°C. The softened glass passes between water-cooled shaped rollers 4, 6 which form the glass into a thin layer 8, termed a 'ribbon' having regularly spaced thicker regions, termed 'biscuits'. The ribbon 8 is picked up by a horizontal endless belt 10, having holes, so positioned that each biscuit falls over a hole in the belt 10. As the belt 10 travels, each biscuit sags through its respective hole and begins to take on a bulbous shape.

The ribbon 8 passes between a plurality of blow heads 12 mounted on an endless chain 14 and a plurality of rotating bulb moulds 16 mounted on an endless chain 18. The endless chains 14, 18 move in the directions indicated by the arrows A, B. The movement of the belt 10 and chains 14, 18 is synchronised such that respective blow heads 12, holes (not shown) in the belt, biscuits (not shown) and bulb moulds 16 coincide. When they coincide, a jet of a gas, such as air, from a blow head 12 is produced and blows the respective biscuit of the ribbon 8 into the respective bulb mould 16 which has been sprayed with water. The steam cushion thus formed between the glass and the mould 16 leaves the formed glass envelope 20 with a polished surface while the rotation eliminates mould seams. The particular bulb moulds 16 used depend on the shape of the glass envelope required.

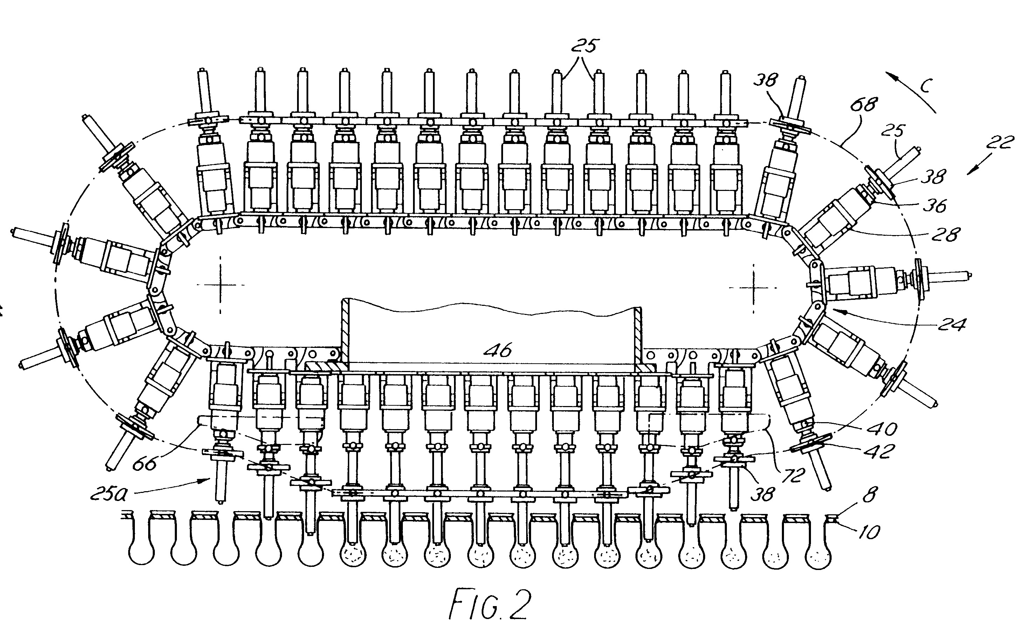

The endless belt 10 carries the formed glass envelopes 20 to means 22 for electrostatically coating the internal surface of the glass envelopes. At this stage, the glass envelopes have a temperature in the range of from 550°C to 750°C. As shown also in Figure 2 (in greater detail), the means 22 comprises an endless chain 24 moving in the direction indicated by the arrow C. The endless chain 24 carries a plurality of nozzle assemblies 25; 35 nozzle assemblies are shown in the Figure.

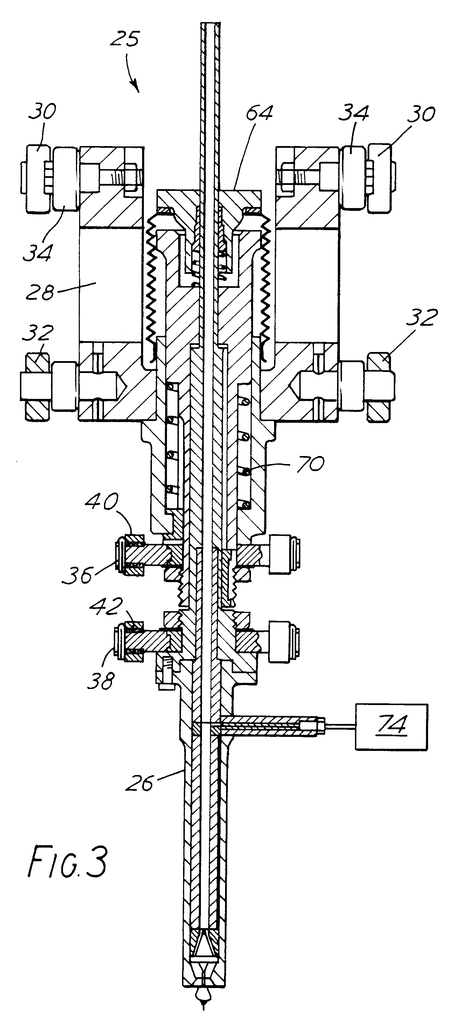

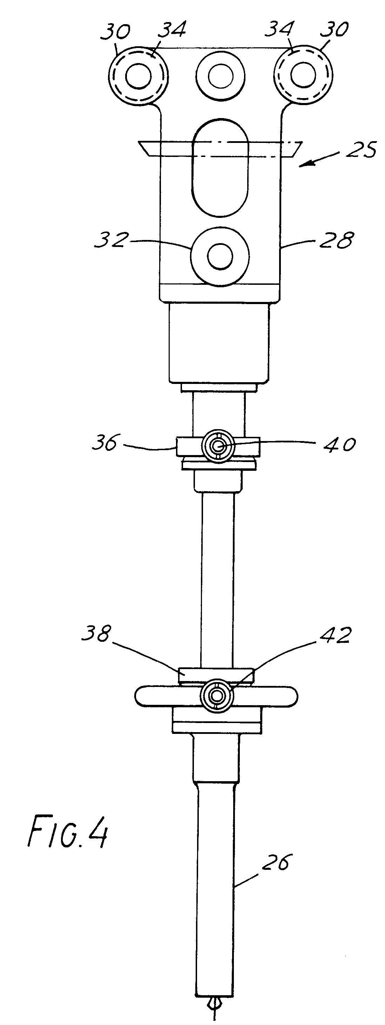

As shown in Figures 3 and 4, a nozzle assembly 25 comprises a nozzle 26 which is carried on a carrier 28. The carrier 28 is supported by rollers 30 and stabilised by rollers 32. The support rollers 30 and stabilising rollers 32 each run in their own guide tracks (not shown). The carrier 28 is driven by a sprocket engaging on drive rollers 34 of which there are three mounted on each side of the carrier 28. To form the endless chain 24, each carrier 28 is machined to allow the adjacent carrier to interlink, the support roller axles providing the link between adjacent carriers.

Associated with each nozzle 26 and carrier 18 are a first stage 36 and a second stage 38 which carry respective rollers 40, 42. The rollers 40, 42 are effective as cam followers to interact with cams to control movement of the nozzles 26 towards and away from the belt 10.

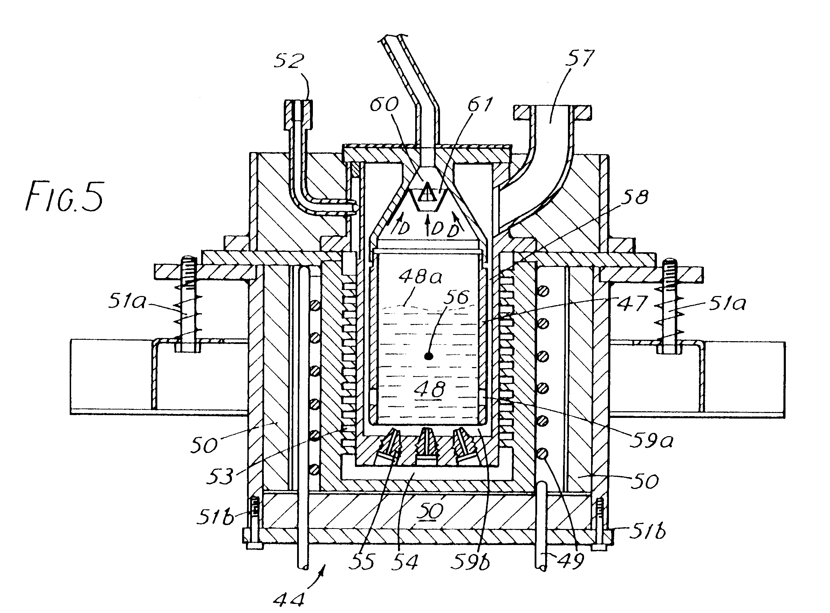

The powder used to coat the glass envelopes 20 is stored in a bulk storage facility (not shown) and automatically supplied, e.g. by a screw feed, to a smoke generator 44 (shown in Figure 5) and thence to a distribution chamber 46 (the position of which is shown in Figure 2). Figure 5 shows the detail of the smoke generator 44.

A smoke generator assembly 44 has a main body 47 for containing glass powder 48 and gas. A metal clad heating element 49 surrounds the body 47, maintaining the body 47 and its contents at an elevated temperature the whole being surrounded by heat insulation 50. Springs 51a, 51b are provided to enable the assembly to be vibrated during operation.

Pressurized air is fed into the smoke generator via an inlet 52 and a spiral groove 53 that runs around the outside of the main body 47. Passage of air through the groove 53 allows the air to be preheated to an elevated temperature prior to its injection into the main body 47 via a manifold 54 and nozzles 55. The Figure shows three nozzles 55 directed towards a point 56. The number of nozzles 55, their arrangement and so the number of points 56 provided in a generator assembly depends on the configuration of the generator.

Fresh spray powder is metered into the top of the generator at an inlet 57. The powder passes down a channel 58 outside the body 47 due to vibration of the assembly and is heated by conduction of heat through metal parts of the spiral groove 53. The powder is drawn into the body 47 via inlets 59a, 59b due to flow patterns caused by air from the nozzles 55.

The point 56 to which the nozzles 55 are directed is termed a 'boil' point and is positioned about two thirds the way up towards the bulk powder level (indicated by a dotted line 48a). In operation, convergence of jets of air from the nozzles 55 at the 'boil' point 56 produces a fine dispersion of powder particles in air, termed a 'smoke' which moves towards an outlet 60 as indicated by the arrows D. A plurality of baffles 61 regulates the passage of the 'smoke' out of the body 47, improving the uniformity of the density of the 'smoke' generated by preventing localised high concentrations of powder such as may arise from the 'boil' from exiting the body 50. The baffles 61 also prevent any agglomerates or large extraneous particles from exiting the body 47.

As already indicated, the design of the generator is directed towards maintaining the body 47, powder 48 and gas at an elevated temperature. To this effect, the gas and powder are preferably pre-heated prior to their introduction into the body 47. It has been found that an elevated temperature of 220°C has a surprisingly beneficial effect on the smoke which can be produced.

The air pressure maintained in the manifold 54 depends on the density of smoke desired, the temperature of the generator and the number and size of the nozzles 55. It is anticipated that in the majority of applications, the air pressure used would be less than one atmosphere (in excess of ambient pressure).

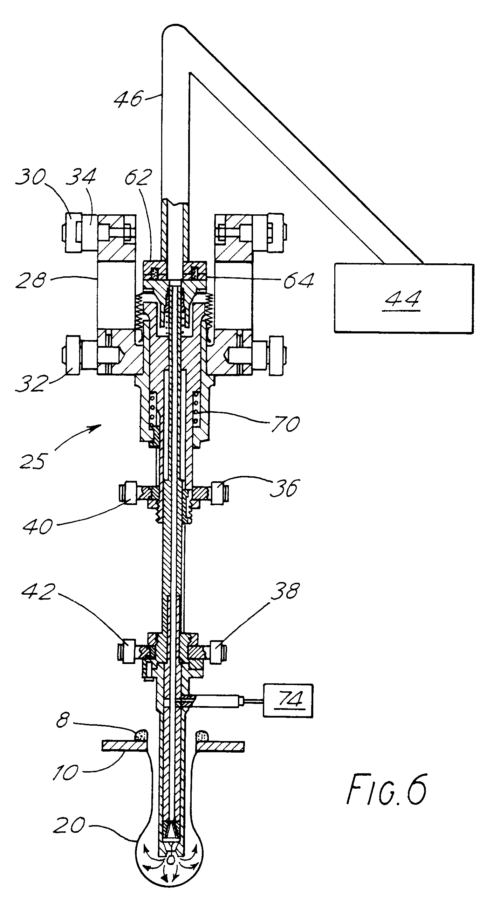

Referring to Figure 6, transfer of smoke from the distribution chamber 46 to a moving nozzle is effected by the co-operation of a slipper plate 62 at the outlet of the distribution chamber 46 and a sealing plate 64 on the nozzle assembly 25. Transfer of smoke and movement of a nozzle 26 is synchronised to movement of the belt 10 such that when the nozzle moves towards the belt 10 it is inserted into a formed glass envelope 20.

Referring back to Figure 2, as a nozzle assembly 25a emerges from the end turn of the endless chain 24 towards the belt 10, action of the rollers 40 and 42 on respective cam tracks 66 and 68 causes the nozzle 26 and the sealing plate 64 to move away from the carrier 28 and away from each other. The movement of the sealing plate 64 is arrested for a short while with the sealing plate 64 clear of the slipper plate 62. Once the sealing plate 64 is aligned with the slipper plate 62, the sealing plate 64 is cammed slightly towards the carrier 28 to allow a spring 70 in the carrier 28 to effect a seal between the slipper plate 62 and the sealing plate 64.

Meanwhile, the nozzle 26 continues moving away from the carrier 28 towards the belt 10 and is inserted into a formed glass envelope 20. At this point, the movement of the nozzle 26 away from the carrier 28 is arrested by the cam track 68. This position is maintained as smoke is injected into the glass envelope 20. Once the smoke has been injected a cam track 72 controls the movement of the nozzle 26 away from the belt 10.

Figure 3 shows the nozzle assembly 25 in the position it is maintained for the majority of the period when it is not aligned with the distribution chamber 46, with the first and second stages 40, 42 close together. Figures 4 and 6 show the nozzle assembly 25 in the fully extended position with the first and second stages 40, 42 apart from each other. It is when the nozzle assembly is moved to this position, as described hereinbefore that transfer of smoke from the distribution chamber 46 to the nozzle 26 can be effected.

As smoke passes through the nozzle 26, an electrostatic power supply 74 causes the powder particles to receive a negative electrostatic charge from a corona discharge at the tip of the nozzle. An electrostatic power supply 74 that has been used can generate a potential difference of up to 100kV with a current in the range of from 100mA to 150mA. The powder particles are accordingly attracted to the internal surface of the formed glass envelope 20 which is at an earth potential and a coating is formed.

An extraction system (not shown) may be incorporated close to the belt 10 to remove excess of smoke from the bulb neck. The excess smoke may be filtered to remove the powder particles.

The coated glass envelopes 76, still attached to the ribbon 8 are then carried to a hammer position (designated generally 78) where they are cracked from the ribbon 8 and dropped onto an annealing conveyor 80. This carries the coated glass envelopes into an annealing lehr 82 where they are annealed before further processing.

The powder particles are formed of a material, such as a soft glass, that softens at the elevated temperature of the glass envelopes as they emerge from the moulds 16 after being formed - in this instance, the elevated temperature is in the range of from 550°C to 750°C. Accordingly, the particles, on contact with the hot envelope, are heated to a sufficient temperature to melt and so adhere to the hot envelope; thus, as the envelope cools, a strong bond is formed between the particles and the glass envelope. The coating so formed is very firm and can be rubbed without any danger of it becoming detached.

The soft glass is advantageously a zinc borosilicate glass with a composition comprising by weight boron oxide ($B_2O_3$) in the range of from 25% to 40%, silicon dioxide ($SiO_2$) in the range of from 15% to 30%, zinc oxide (ZnO) in the range of from 12.7% to 35%, sodium fluoride (NaF) in the range of from 4.5% to 8% and sodium oxide ($Na_2O$) in the range of from 1.9% to 9%. The addition of fluorine as NaF is convenient but the fluorine may also be added as the fluoride of one or more of the other elements present.

Such glasses can be formulated to have a sufficiently low viscosity in the temperature range stated to adhere to a glass envelope. Furthermore such glasses can be formulated to give an appropriate coefficient of thermal expansion e.g. one to match that of soda-lime-silica bulb glass compositions of which most incandescent glass envelopes are formed. Another property of such glasses which can be achieved is that they have sufficient chemical durability, e.g. they do not easily absorb or adsorb moisture, so that glass envelopes coated with powders of such glasses can be stored for significant periods of time without adverse effects.

Potassium oxide ($K_2O$) in the range of from 0 to 7% may also be added. The use of Lithium oxide ($Li_2O$) is particularly valuable to obtain low viscosity together with good chemical durability. However, there is the possibility that lithium ions could migrate from the coating into the glass envelope and set up tensile stresses, resulting in a degree of weakening of the glass envelope. Accordingly, $Li_2O$ can be used and its use does confer benefits, but it is necessary to be aware of the possiblity that the benefits of the use of $Li_2O$ may be accompanied by some weakening of the coated glass envelopes.

The properties of the soft glass can be further modified by including one or more compounds from the following Group.

| Compound | Range |
|----------|-------|
| Zirconium (IV) oxide ($ZrO_2$) | 0-5% |
| Aluminium oxide ($Al_2O_3$) | 0-7% |
| Magnesium oxide (MgO) | 0-5% |
| Tungsten (VI) oxide ($WO_3$) | 0-5% |
| Molybdenum (VI) oxide ($MoO_3$) | 0-5% |
| Barium oxide (BaO) | 0-5% |
| Calcium oxide (CaO) | 0-5% |

All the compounds listed in this group give some improvement in chemical durability; $ZrO_2$ gives the greatest benefit with $Al_2O_3$ and MgO also being particularly efficacious in this respect. $WO_3$ and $MoO_3$ have the effect of reducing the surface tension of the soft glass so that it flows more readily during application. If more than 3% in total of $WO_3$ and $MoO_3$ is present in the soft glass, then the soft glass can, under certain circumstances, develop a yellowish cast; however, this can be prevented by including about 5% or more of $TiO_2$ either in the soft glass itself or in a mixture incorporating soft glass powder.

The usefulness of lead (II) oxide (PbO) in soft glass compositions is well known and its incorporation would have some advantages. However, the glass is to be finely milled and applied as a suspension in air to produce a coating. The potential toxicity of lead-containing compounds is well-known and this toxicity would be enhanced by the finely divided state of the glass. It is the inventors opinion, therefore, that the advantages conferred by the use of PbO are outweighed by the potential health risk associated with any accidental leaks of airborne suspensions of the glass powder at any stage.

Specific examples of soft glass compositions which may be used are shown below as percentages by weight. The line indicated by '=F' shows the amount of fluorine present in the composition due to the NaF.

|  | 89Z | 89T | 89C | 93D | 42D | 89R | 73 | 93S |
|---|---|---|---|---|---|---|---|---|
| $SiO_2$ | 20 | 28.9 | 29 | 18 | 22 | 28 | 22.9 | 23.4 |
| $B_2O_3$ | 40 | 28.9 | 29 | 40 | 31 | 28 | 32.3 | 38 |
| $ZnO$ | 27 | 23.1 | 26 | 18 | 27 | 31 | 25 | 12.7 |
| $Na_2O$ | 6 | 3.8 | 2 | 2 | 4 | 7 | 5.2 | 8.3 |
| $NaF$ | 7 | 6.7 | 7 | 7 | 7 | 6 | 7.3 | 6.8 |
| $K_2O$ | - | 3.8 | 3 | 5 | 5 | - | 4.2 | - |
| $Al_2O_3$ | - | 4.8 | - | - | - | - | - | 6.8 |
| $MoO_3$ | - | - | 4 | 5 | 2 | - | - | 3.9 |
| $WoO_3$ | - | - | - | 5 | 2 | - | - | - |
| $ZrO_2$ | - | - | - | - | - | - | 3.1 | - |
| = F | 3.2 | 3.0 | 3.2 | 3.2 | 3.2 | 2.7 | 3.3 | 3.1 |
| $LiO_2$ | - | - | - | - | - | - | - | - |

|        | 89N | 89P | 89S  | 92C  | 42K | 93N  | 89E | 90R |
|--------|-----|-----|------|------|-----|------|-----|-----|
| $SiO_2$ | 29 | 27.9 | 28.9 | 21 | 22 | 27.1 | 29 | 20 |
| $B_2O_3$ | 29 | 27.9 | 28.9 | 34.3 | 31 | 32.7 | 29 | 40 |
| ZnO | 24 | 25 | 23.1 | 25.7 | 24 | 16.8 | 26 | 27 |
| $Na_2O$ | 2 | 1.9 | 1.9 | 5.7 | 5 | 8.4 | 2 | 6 |
| NaF | 7 | 6.7 | 6.7 | 6.7 | 7 | 6.5 | 5 | 6 |
| $K_2O$ | 3 | 2.9 | 6.7 | 2.9 | 6 | 0.9 | 3 | – |
| $Al_2O_3$ | – | – | 3.8 | – | – | 4.7 | – | – |
| $MoO_3$ | 6 | 3.8 | – | 1.9 | – | 2.8 | – | – |
| $WO_3$ | – | 3.8 | – | 1.9 | 2 | – | 4 | – |
| $ZrO_2$ | – | – | – | – | 3 | – | – | – |
| = F | 3.2 | 3.0 | 3.0 | 3.0 | 3.2 | 2.9 | 2.3 | 2.7 |
| $LiO_2$ | – | – | – | – | – | – | 2 | 1 |

The soft glass can easily be prepared by a conventional melting technique. In order to facilitate subsequent milling operations to produce powders of the desired particle size, the glass should be as finely divided as possible. This can be achieved by pouring the still-molten glass into water to form a 'frit'. In order to produce the powder must be very finely divided, preferably with an average particle size of from $3\mu m$ to $4\mu m$ and with a maximum particle size of $12\mu m$, though particles of larger size may be used. Glasses having the composition of the powder defined hereinbefore are capable of being milled down to the preferred sizes.

Additives which improve the flow characteristics ('free-flow aids') of the soft glass powder are highly desirable as they substantially improve the smoke generating characteristics of the powder. Examples of such additives include precipitated silicas, e.g. Sipernat D17 from Degussa Ltd. Certain additives, which would be included primarily for their whitening effect on the coating, may also possess free-flow characteristics. Such additives include an aluminosilicate material P820 from Degussa Ltd, and, to a lesser extent, $TiO_2$.

It has been found that for a P5060 (GLS) glass envelope, a large range of coating types can be achieved by the deposition of a mass of powder or mixture in the range of from 0.3g to 0.6g. In principle, this corresponds to a coating thickness approximately in the range of from $9\mu m$ to $18\mu m$ - the actual thickness of coating depends on the powder or mixture used and the temperature of application.

## Claims

1. An apparatus for manufacturing a light diffusing glass envelope, the apparatus comprising means for forming a glass envelope from a layer of glass at an elevated temperature and means for electrostatically depositing particles of a powder on the internal surface of said glass envelope to form a coating on said internal surface, wherein said means for electrostatically depositing particles is positioned to permit deposition of said particles when said glass envelope is attached to said layer.

2. An apparatus according to Claim 1 wherein said means for electrostatically depositing particles includes means for generating a fine dispersion of said particles at another elevated temperature.

3. An apparatus according to Claims 1 or 2 wherein said means for forming the glass envelope from a layer of glass at said elevated temperature comprises a belt for supporting said layer, the belt having a plurality of holes, and further comprises a plurality of means for producing a respective jet of gas mounted on a first endless chain and a plurality of moulds mounted on a second endless chain, in use, movement of said belt and said first and second endless chains being synchronised so that a means for producing a respective jet of gas and a respective mould coincide when said means for producing a respective jet of gas is above a hole in the belt.

4. An apparatus according to Claim 3 wherein said means for electrostatically depositing particles of a powder comprises a plurality of nozzles through which said particles can pass, said plurality of nozzles being movably mounted on a third endless chain, in use, movement of said belt, said third endless chain and each of said plurality of nozzles being synchronised so that a nozzle is moved towards said belt when a hole in the belt is below said nozzle.

## Patentansprüche

1. Vorrichtung zur Herstellung einer lichtstreuenden Glashülle mit Mitteln zur Bildung einer Glashülle aus einer Glasschicht bei einer erhöhten Temperatur und mit Mitteln zur elektrostatischen Ablagerung von Partikeln eines Pulvers auf der Innenfläche der Glashülle, um einen Belag auf der Innenfläche zu bilden, wobei die Mittel zur elektrostatischen Ablagerung von Partikeln so positioniert sind, daß die Ablagerung der Partikel möglich gemacht wird, wenn die Glashülle an der Schicht angebracht wird.

2. Vorrichtung nach Anspruch 1, bei der die Mittel zur elektrostatischen Ablagerung von Partikeln Mittel zur Erzeugung einer feinen Dispersion der Partikel bei einer anderen erhöhten Temperatur einschließen.

3. Vorrichtung nach Anspruch 1 oder 2, bei der die Mittel zur Bildung der Glashülle aus einer Glasschicht bei der erhöhten Temperatur aus einem Tragriemen für die Schicht bestehen, wobei der Riemen eine Vielzahl von Löchern hat, und wobei ferner eine Vielzahl von Mitteln zur Erzeugung eines entsprechenden Gasstrahls an einer ersten Endloskette und eine Vielzahl von Formen an einer zweiten Endloskette angebracht ist, wobei im Betrieb die Bewegungen des Riemens sowie der ersten und zweiten Endloskette synchronisiert sind, so daß ein Mittel zur Erzeugung eines entsprechenden Gasstrahls und eine entsprechende Form sich decken, wenn die Mittel zur Erzeugung eines entsprechenden Gasstrahls sich über einem Loch in dem Riemen befinden.

4. Vorrichtung nach Anspruch 3, bei der die Mittel zur elektrostatischen Ablagerung von Partikeln eines Pulvers eine Vielzahl von Düsen umfassen, durch die die Partikel hindurchverlaufen können, wobei die Vielzahl von Düsen beweglich an einer dritten Endloskette angebracht ist, und wobei im Betrieb die Bewegungen des Riemens, der dritten Endloskette und jeder der Vielzahl von Düsen synchronisiert sind, so daß eine Düse in Richtung auf den Riemen bewegt wird, wenn sich unterhalb der Düse ein Loch im Riemen befindet.

## Revendications

1. Un appareil de fabrication d'une enveloppe en verre de diffusion de lumière, l'appareil comprenant un moyen pour former une enveloppe en verre à partir d'une couche de verre à une température élevée et un moyen pour déposer de manière électrostatique des particules d'une poudre sur la surface interne de ladite enveloppe en verre afin de former un revêtement sur ladite surface interne, dans lequel ledit moyen de dépôt électrostatique de particules est positionné afin de permettre un dépôt desdites particules lorsque ladite enveloppe en verre est attachée à ladite couche.

2. Un appareil selon la revendication 1 dans lequel ledit moyen de dépôt électrostatique de particules inclut un moyen de génération d'une fine dispersion desdites particules à une autre température élevée.

3. Un appareil selon la revendication 1 ou 2 dans lequel ledit moyen de formation de l'enveloppe en verre à partir d'une couche de verre à ladite température élevée comprend une courroie de support de ladite couche, ladite courroie comprenant une série de trous et comprenant en outre une série de moyens de production d'un jet respectif de gaz montés sur une première chaîne sans fin et une série de moules montés sur une deuxième chaîne sans fin, le mouvement de ladite courroie et desdites première et deuxième chaînes sans fin étant synchronisé en utilisation d'une manière telle qu'un moyen de production d'un jet respectif de gaz et d'un moule respectif coïncident lorsque ledit moyen de production d'un jet respectif de gaz est situé au-dessus d'un trou de la courroie.

4. Un appareil selon la revendication 3 dans lequel ledit moyen de dépôt électrostatique de particules d'une poudre comprend une série d'ajutages à travers lesquels les particules peuvent passer, ladite série d'ajutages étant montée de façon mobile sur une troisième chaîne sans fin, le mouvement de ladite courroie, de ladite troisième chaîne sans fin et de chacune desdites séries d'ajutages étant synchronisé en utilisation afin qu'un ajutage soit déplacé vers ladite courroie lorsqu'un trou de la courroie est situé au-dessous dudit ajutage.

FIG.1

FIG.2

FIG.3

FIG.4

FIG.5

FIG.6